# EUROPEAN PATENT SPECIFICATION

(11) **EP 2 736 874 B1**
(45) Date of publication and mention of the grant of the patent: **20.03.2024**
(21) Application number: 12817561.9
(22) Date of filing: 23.07.2012
(51) Int. Cl.: C07C 215/80, C07C 215/12, B01J 23/04, B01J 31/12, C08G 18/28, C08J 9/00

(54) **AMINE-INITIATED POLYOLS FROM RENWABLE RESOURCES AND PROCESSES FOR THEIR PRODUCTION AND USE**
AMIN-INITIIERTE POLYOLE AUS ERNEUERBAREN RESSOURCEN UND VERFAHREN ZU IHRER HERSTELLUNG UND VERWENDUNG
POLYOLS INITIÉS PAR AMINE PROVENANT DE RESSOURCES RENOUVELABLES ET PROCÉDÉS POUR LEUR PRODUCTION ET UTILISATION

(30) Priority: 26.07.2011 US 201113190648
(43) Date of publication of application: 04.06.2014
(73) Proprietor: Covestro LLC, Pittsburgh, PA 15205 (US)
(72) Inventor: WARDIUS, Don S., Pittsburgh, PA 15228 (US); SCHILLING, Steven L., Pittsburgh, PA 15228 (US)
(74) Representative: Levpat
(86) International application number: PCT/US2012/047808
(87) International publication number: WO 2013/016263

(56) References cited:
- EP-A2- 1 162 222
- EP-A2- 2 177 555
- WO-A1-2010/014691
- WO-A2-2009/148559
- US-A- 5 886 062
- US-A- 5 962 749
- US-A1- 2005 014 857
- US-A1- 2008 058 436
- US-A1- 2008 114 086
- US-B1- 6 762 214

## Description

### BACKGROUND OF THE INVENTION

The present invention relates to a process for the production of amine-initiated polyether polyols produced in part from renewable resources, to an amine/triglyceride-initiated polyether polyol having a biorenewable content in the range of 50 to 85% by weight and a number average equivalent weight of from 100 to 600and to rigid polyurethane foams having a k-factor at 75°F (23.9°C) of from 0.140 to 0.160 BTU-in/h-ft.²°F (0.020 to 0.023 W / m K) comprising the reaction product of such an amine-based polyol, an organic polyisocyanate, and a blowing agent.

Polyether polyols are known to be useful in the production of rigid polyurethane and polyurethane-polyisocyanurate foams. In one of the most common methods for the production of these polyols, a polyhydric alcohol such as sucrose is reacted with an alkylene oxide such as ethylene oxide or propylene oxide in the presence of an alkaline catalyst such as potassium hydroxide. Prior to use in the production of foams, any alkaline catalyst present in the polyol must be neutralized and/or removed to ensure that the catalyst will not interfere with the reaction between polyol and another reactive material such as a polyisocyanate. This is generally accomplished by addition of an acid to neutralize the alkaline catalyst. This neutralization frequently results in the formation of a solid salt in the polyol which salt may be removed by filtration. The removed solid is commonly called the filter cake.

One type of polyether polyol which has been found to be advantageous in foam-forming systems blown with non-CFC blowing agents is an amine-initiated polyether polyol. Such polyether polyols may be formed by reacting an amine such as toluene diamine with an alkylene oxide such as ethylene oxide or propylene oxide. These amine-based polyols are particularly advantageous for the production of rigid foams with non-CFC blowing agents which foams are characterized by low thermal conductivity, good dimensional stability, and good compressive strength. In addition, the amine-based polyols help promote the polyurethane reaction, which reduces the amount of catalyst that would otherwise need to be added.

Polyols derived from renewable resources are becoming more commercially desirable due partly to the increasing cost of petroleum-derived feedstocks. The "green" image of renewable-based products has also become a significant factor in the marketing of articles containing foam; however, the physical characteristics and properties are still required to be comparable to foams produced from petroleum-based polyols. In addition, retailers and government agencies are pushing for higher renewable resource content in the finished goods they sell or purchase to take advantage of this "green" image or to reduce the dependence on petroleum-based materials.

EP2177555 discloses a process for the preparation of polyetherester polyols. WO2010014691 discloses rigid polyurethane foam based on orthocyclohexanediamine-initiated polyols. WO2009148559 discloses a process for preparing rigid polyisocyanurate foams using natural-oil polyols. US5886062 discloses a process for the production of rigid polyurethane foams. US2008114086 discloses a process for the preparation of polyether-ester polyols.

It would therefore be advantageous to develop an amine-based polyol produced, at least in part, from a renewable resource.

### SUMMARY OF THE INVENTION

It is an object of the present invention to provide an amine-initiated polyether polyol derived from renewable resources having an overall renewable content of from about 20 to about 85% by weight.

It is also an object of the present invention to provide a process for the production of an amine-initiated polyether polyol derived from renewable resources having an overall renewable content of from about 20 to about 85% by weight.

It is a further object of the present invention to provide amine-initiated polyether polyols derived from renewable resources which produce polyurethane foams having very good thermal insulation properties.

These objects are accomplished by
a process as defined in claim 1 which comprises reacting an amine, such as toluene diamine (TDA), with an epoxide such as ethylene oxide or propylene oxide to form an amine-based alkoxylated adduct, which is then reacted with a triglyceride in the presence of an alkylene oxide and potassium hydroxide (KOH) or potassium alkoxide (KOR) as a catalyst; an amine/triglyceride-initiated polyether polyol as defined in claim 7; and a rigid polyurethane foam as defined in claim 8.

### DETAILED DESCRIPTION OF THE INVENTION

The present invention relates to a process for the production of amine-initiated polyether polyols which are derived from renewable resources as defined in claim 1 (with preferred embodiments thereof being defined in claims 2 to 6), to amine/triglyceride-initiated polyether polyols as defined in claim 7 and to rigid polyurethane foams as defined in claim 8.

The process of the present invention comprises preparing an amine-based adduct that is produced by reacting a diamine or polyamine with an alkylene oxide. This amine-based adduct is then reacted with a triglyceride and optionally, a polysaccharide compound like sucrose or sorbitol or a glycerol or a polyglycerol in the presence of an alkylene oxide and potassium hydroxide (KOH) or a potassium alkoxide (KOR) as a catalyst. Methods for conducting such alkoxylation reactions are known in the art.

Generally, the polyol production process of the present invention is conducted at a temperature of from 100 to 150°C, preferably, 125°C. The reaction vessel in which the polyol of the present invention is produced will generally be rated to hold at least 5 bar of pressure due to the need to contain the volatile alkylene oxide at the temperatures used to carry out the process of the present invention.

In general, the amine-based adduct used to produce the polyether polyols of the present invention is prepared by reacting an alkylene oxide with an amine having an amine functionality of at least 1, preferably,

The amine and alkylene oxide are reacted in amounts such that from 1 to 2 moles of alkylene oxide, preferably, from 1.25 to 1.9 moles of alkylene oxide are present for each amine group. No added catalyst is required to carry out this initial reaction to form the amine-based adduct.

The amines useful in the production of the amine-based adduct have an average amine functionality of at least 1, preferably from 2 to 3 most preferably 2. Examples of suitable amines include: aromatic amines such as crude toluene diamine obtained by the nitration of toluene followed by reduction; 2,3-toluene diamine; 3,4-toluene diamine; 2,4-toluene diamine; 2,6-toluene diamine; and isomeric mixtures of toluene diamine; aniline; 4,4'-methylene dianiline; methylene-bridged polyphenyl polyamines composed of isomers of methylene dianilines and triamines or polyamines of higher molecular weight prepared by methods known in the art; alkanol amines such as monoisopropanolamine, diisopropanolamine, monoethanolamine, diethanolamine organic amines such as ethylene diamine, and diethylene triamine; and Mannich reaction products of phenol or substituted phenols with alkanol amines and formaldehyde or paraformaldehyde. Mixtures of the above amines may also be used.

Examples of alkylene oxides useful in producing the amine-based adduct and useful in the reaction of the amine-based adduct with a triglyceride in the process of the present invention include: ethylene oxide, propylene oxide, butylene oxide, and mixtures of these alkylene oxides. Use of only ethylene oxide to produce the amine-based adduct is preferred. Ethylene oxide or propylene oxide or mixtures of ethylene oxide and propylene oxide are preferably included in the reaction of the amine-based adduct with the triglyceride.

The triglyceride(s) reacted with the amine-based adduct are generally reacted in amounts such that the weight ratio of triglyceride to amine is from 3:1 to 12:1, preferably, from 4:1 to 10:1, most preferably from 5:1 to 9:1.

Any of the naturally occurring plant oils, plant oil products, animal-derived fats or oils, synthetic triglycerides, heat or chemically treated triglycerides, modified triglycerides or epoxidized triglycerides may be used to produce the amine-initiated polyether polyols of the present invention. Examples of suitable triglycerides include: soybean oil, palm oil, palm kernel oil, castor oil, canola oil, high erucic acid content rapeseed oil, rapeseed oil, corn oil, jatropha oil, peanut oil, cottonseed oil, linseed oil, lard, tallow, bodied soybean oil, epoxidized soybean oil, camelina oil, lipids derived from algae, lesquerella oil, limnanthes (meadowfoam) oil and combinations thereof. In addition, it is possible to employ either crude or refined triglycerides in the polyol reaction process. Soybean oil (refined bleached de-odorized grade) is particularly preferred.

A naturally occurring sugar (i.e., a carbohydrate having at least one saccharose group) such as sucrose or sorbitol may optionally be included in the reaction mixture containing the amine-based adduct and the triglyceride(s). Glycerol or polyglycerol (such as Diglycerol^{™} by Solvay Chemicals) may also be used in addition to or in place of a sugar.

When a sugar is included in the reaction mixture composed of the amine-based adduct, triglyceride and alkylene oxide, it is generally included in an amount such that the molar ratio of sugar to triglyceride is from 0.01 to 0.64, preferably, from 0.2 to 0.35.

When a glycerol is included in the reaction mixture composed of the amine-based adduct, triglyceride and alkylene oxide, it is generally included in an amount such that the molar ratio of glycerol to triglyceride is from 0.01 to 0.5, preferably, from 0.2 to 0.4.

When a combination of sugar and glycerol is included in the reaction mixture composed of the amine-based adduct, triglyceride and alkylene oxide, the total amount of sugar and glycerol generally included is an amount such that the molar ratio of sugar plus glycerol to triglyceride is from 0.01 to 0.55, preferably, from 0.2 to 0.44.

The catalyst e) capable of catalyzing an epoxidation reaction used in the process of the present invention during the reaction of the amine adduct with the triglyceride in the presence of an alkylene oxide is potassium hydroxide or potassium alkoxide. Potassium hydroxide is particularly preferred. When used, potassium hydroxide is generally used in an amount that results in a concentration of from 0.05 to 0.5% after addition of the epoxide. It is preferred that any potassium hydroxide remaining in the reaction mixture after completion of the reaction be neutralized to promote stability of the polyol and ensure consistent performance in the intended applications. The potassium hydroxide catalyst can be neutralized with sulphuric acid to form potassium sulphate, which can be removed from the product by filtration. It can also be neutralize with acetic acid or lactic acid, to form salts which remain soluble in the product and do not need to be removed.

The amine-initiated polyether polyols prepared from the process of claim 1 have a functionality of from 1.5 to 3.5, preferably from 1.7 to 3.2, most preferably, from 2.0 to 3.0, an equivalent weight (number average, determined by end group analysis) of from 100 to 600, preferably, from 130 to 500, most preferably, from 150 to 400, and an overall renewables content of from 20 to 85%, preferably, from 50 to 80%, most preferably, from 65 to 75%. These polyols generally have a viscosity at 25°C of from 100 to 1500, preferably from 150 to 800 mPa·sec.

The renewables content is calculated by a mass balance of the material charges to the reactor, followed by an assessment of the extent of the reaction by carrying out size exclusion chromatography of the reaction product. ASTM D6866 is used to determine the biobased carbon content of the product.

After the polyol has been prepared, any residual catalyst remaining in the reaction mixture will generally be neutralized in accordance with techniques known to those skilled in the art. Neutralization need not be exact neutrality (i.e., pH=7.0). The reaction mixture may be maintained at a slight acidity or alkalinity, i.e., at a pH of from 5 to 11, preferably, from 6 to 10. It is preferred that any salt formed from the neutralized catalyst be soluble in the polyether polyol so that the product amine-initiated polyol may be used in polyurethane foam-forming equipment without subsequent treatment and without generating large amounts of solid waste material.

Examples of hydroxy carboxylic acids useful in neutralizing residual catalyst include: lactic acid, salicylic acid, substituted salicylic acids such as 2-hydroxy 3-methyl benzoic acid, 2-hydroxy 4-methyl benzoic acid and combinations of these acids. Lactic acid is particularly preferred.

The neutralized polyether polyol reaction mixture of the present invention is clear (i.e., free from haze) and may be used directly in processes for the production of polyurethane foams. Methods for the production of polyurethane foams from such polyether polyols are well known to those in the art.

Generally, a polyether polyol such as that produced in accordance with the present invention is reacted with an organic polyisocyanate in the presence of a blowing agent to produce a polyurethane foam.

Organic polyisocyanates which may be reacted with the amine-initiated polyether polyols of the present invention to produce good polyurethane foams include: 2,4-toluene diisocyanate, 2,6-toluene diisocyanate and isomeric mixtures of these diisocyanates; diphenylmethane-4,4'-diisocyanate diisocyanate and polymethylene polyphenyl polyisocyanates; 4,4'-methylene-bis-cyclohexyl diisocyanate; isophorone diisocyanate; and prepolymers of such polyisocyanates.

Blowing agents useful in the production of polyurethane foams from the amine-initiated polyether polyols of the present invention include: water; hydrochlorofluorocarbons such as 1,1-dichloro-1-fluoroethane (HCFC-141b), 1-chloro-1,1-difluoroethane (HCFC-142b), and chlorodifluoromethane (HCFC-22); hydrofluorocarbons such as 1,1,1,3,3-pentafluoropropane (HFC-245fa), 1,1,1,2-tetrafluoroethane (HFC-134a), and 1,1,1,4,4,4-hexafluorobutane (HFC-356mffm); halogenated olefins such as cis-1,1,1,4,4,4-hexafluorobutene (HFO-1336mzz-Z); the blowing agent available from Honeywell under the designation HBA-2; hydrocarbons such as isomers of pentane and cyclopentane; and mixtures of the above. Water, HFC-245fa, hydrocarbons and halogenated olefins or mixtures thereof are particularly preferred.

Other known auxiliary agents and additives such as catalysts, surfactants, stabilizers, emulsifiers, fillers, etc. may also optionally be included in foam-forming mixtures containing the amine-initiated polyether polyols of the present invention.

Any of the known methods for producing polyurethane foams may be used to produce foams from the amine-initiated polyether polyols of the present invention. These known methods include the one-shot process, a prepolymer process, and other processes.

The foams produced with the amine-based polyols of the present invention are characterized by properties comparable to those of foams produced with polyols derived from the traditional petroleum-based materials.

Having thus described our invention, the following Examples are given as being illustrative thereof. All of the parts and percentages given in these Examples are parts by weight and percentages by weight, unless otherwise indicated.

### EXAMPLES

The polyether polyols with high renewable contents described in Examples 1 and 2 were produced by a simultaneous transesterification alkoxylation process described more fully below. In each of Examples 1 and 2, potassium hydroxide (KOH) catalyst was employed to promote rapid and complete incorporation of all reactants. In Example 1, the KOH catalyst was used only in the final step.

### EXAMPLE 1: PREPARATION OF NOP A (According to the present invention)

Ortho-toluene diamine (o-TDA) was treated to inhibit color formation in shipping and handling by addition of para-formaldehyde in accordance with the teachings of U.S. Patent 6,004,482.

The o-TDA was first reacted with ethylene oxide using the inherent reactivity of the amine groups. 2635 gms of molten o-TDA were charged to a clean, dry stainless steel reactor. The reactor was closed, the atmosphere in the vessel was purged of air as completely as possible. Under a nitrogen atmosphere, the molten o-TDA was stirred and heat was applied to establish a uniform temperature of 130°C. A feed of ethylene oxide was initiated at a rate of 5 gm/min. This rate was gradually increased to 50 gm/min. A total of 3297 grams of EO was fed to the reactor in this manner. As the feed of ethylene oxide proceeded, the temperature of the reactor was allowed to gradually increase to 150°C. After all of the ethylene oxide had been fed, the reaction mixture was allowed to post-react completely by holding the reaction mass at 150°C with continued stirring for 1 hour. The resulting adduct of ethoxylated o-TDA was analyzed and was found to have a hydroxyl number of about 763 mg KOH/g.

2001 grams of the adduct of o-TDA, made as described above, were then charged to a clean, dry stainless steel reactor. 26.5 grams of 46% aqueous KOH were then added to the o-TDA adduct. 5255.4 grams of refined bleached de-odorized soybean oil (Cargill AR grade) were then added to the reactor. The reactor was closed and the atmosphere in the vessel was carefully purged of air. Under a nitrogen atmosphere, the reactor contents were stirred and heat was applied to establish a uniform temperature of 115°C in the reactor. Then the contents of the reactor were carefully subjected to vacuum and gradual nitrogen sparging to the bottom portion of the liquids for one hour while maintaining the temperature at 115°C in order to de-water the system. The vacuum was broken with nitrogen and the contents were gradually heated to establish a uniform temperature of 125°C. EO was then fed into the reactor at a rate of 5 gms/min. As the feed was established, the feed rate was gradually increased to 30 gm/min. A total of 533 gms of EO were fed to the reactor. Following the completion of the EO feed, the process was held at 125°C to completely post-react all of the EO into the polyol over a period of about 3.5 hours. Then about 27 grams of 88% aqueous lactic acid were added to the reaction mixture to neutralize the polyol. About 4 grams of the stabilizer commercially available under the name Irganox^{™}1076 were added to inhibit unintended oxidative degradation of the polyol during its handling and storage.

The resulting polyol, designated "NOP A" herein, was dark in color but transparent. This polyol had a hydroxyl number of about 193 mg KOH/g, a viscosity at 25°C of 270 mPa·sec, a viscosity at 40°C of 119 mPa·sec, with a pH measured at 7.4 and a moisture content of 0.05%.

### EXAMPLE 2: PREPARATION OF NOP B (Comparative)

The KOH catalyst used to produce the polyol in accordance with this Example was used in an essentially anhydrous form by means of using the potassium salt of propoxylated glycerine (potassium alkoxide). The potassium alkoxide was made by charging 9620 grams of glycerine and 311 grams of aqueous potassium hydroxide (45%) into a 5-gallon stainless steel pressure-rated alkoxylation reactor at ambient temperature. The reactor was purged with nitrogen, closed, and heated to 110°C. Steady and thorough stirring of the liquid phase was applied, and vacuum was applied to the vapor space. Water vapor was condensed external to the reactor and the vacuum was discontinued after a period of one-two hours when the rate of water being condensed had greatly diminished. Vacuum was discontinued and the reactor was sealed in preparation for feeding the propylene oxide.

Propylene oxide was fed to the reactor gradually while the temperature of the liquid phase was maintained at 115°C. The total amount of propylene oxide fed to the reactor was 8110 grams over a time period of 5.5 hours. The propylene oxide (PO) was post-reacted completely by monitoring the pressure profile at 115°C (isothermal conditions). The time required for post-reaction was 7 hours. The product was then vacuum stripped to assure that there would be no residual unreacted PO, and then it was cooled under a nitrogen blanket.

The result was a potassium alkoxide having a hydroxyl number of 977 mg KOH/gm, and potassium hydroxide concentration of 0.82% (as pure KOH) as determined by titration.

### Preparation of a Short Chain NOP Polyether with a high renewable content:

3626 grams of the potassium alkoxide produced as described above and 8000 grams of soybean oil (refined, bleached, de-odorized; commercially available as "Cargill AR") were charged at room temperature to a 5-gallon stainless steel pressure-rated alkoxylation reactor under a "nitrogen sweep". The reactor, now free of air, was closed and pressurized with nitrogen.

The reactor contents were then heated to 125°C and a nitrogen pressure of 1.1 bar, absolute was established in the reactor.

Ethylene oxide (EO) was fed to the reactor gradually while the temperature of the liquid phase was maintained at 125°C. The feed rate of EO was controlled by a feedback loop control to maintain a safe and relatively constant pressure.

6000 grams of ethylene oxide were fed to the reactor in 210 minutes. The reaction mixture was post-reacted at 125 to 130°C until the pressure had decreased to a stable value indicating that all of the EO had reacted. The reaction mixture was cooled to 90°C and 56 grams of 88% aqueous lactic acid were added to fully neutralize the residual alkalinity of the polyol. The mixture was then heated back up to 110°C and full vacuum was applied to the vapor space of the reactor to remove moisture from the product.

9 grams of the anti-oxidant compound available under the name "Irganox 1076" were added to the reaction mixture. This corresponded to 500 ppm in the final product.

The mixture was then thoroughly mixed and cooled. The product was discharged from the reactor under a nitrogen blanket.

The polyether product was a clear liquid with a uniform appearance having the following properties:

| | |
|---|---|
| Hydroxyl Number (mg KOH/gm) | 210 |
| Acid Number (mg KOH/gm) | 0.024 |
| Water (%) | 0.015 |
| Color (Gardner) | 3 |
| pH (isopropanol/water) | 8.5 |
| Molecular weight distribution (Polydispersity) | 1.15 |
| Molecular weight, average (GPC) | 625 |
| Peak molecular weight (GPC) | 748 |

By theoretical calculation, the mean hydroxyl functionality of this polyether was estimated to be 2.1. By theoretical mass balance, this base polyol had a renewables content of 57%.

The following materials were used to produce the rigid polyurethane foams described in Examples 3-5:

| | | |
|---|---|---|
| NOP A: | | A KOH-catalyzed, ortho-TDA/soybean oil-initiated polyether polyol (100% EO) having a vegetable oil content of about 67%, a hydroxyl number of about 193 mg KOH/gm, a viscosity at 25°C of about 270 mPa·sec, and a functionality of about 2.2. |
| NOP B: | | A KOH-catalyzed, glycerine/soybean oil-initiated polyether polyol (100% EO) having a vegetable oil content of about 45%, a hydroxyl number of about 210 mg KOH/gm, a viscosity at 25°C of about 147 mPa·sec, and a functionality of about 2.1. |
| POLYOL C: | A polyester polyol with a hydroxyl number of 240 mg KOH/g and a viscosity of about 3000 centipoise at 25°C, available from the Stepan Company as Stepanpol PS 2412. | |
| POLYOL D: | A sucrose based polyether polyol with a hydroxyl number of 470 mg KOH/g and a viscosity of about 33,000 centipoise at 25°C, available from Bayer MaterialScience as Multranol 4034. | |
| FR 1: | Tris(2-chloroispropyl) phosphate, a flame retardant available under the name Fyrol PCF from ICL Industrial Products. | |
| FR 2: | The diol of tetrabromophthalic acid, available from Albermarle as Saytex RB-79 Flame Retardant. | |
| SURF: | A silicon surfactant available from Evonik under the name Tegostab B-8465. | |
| CAT 1: | | A polyisocyanurate catalyst available from Air Products as Dabco K-15 consisting of potassium octoate in diethylene glycol. |
| CAT 2: | | A polyurethane catalyst commercially available from Air Products as Polycat 43. |
| CAT 3: | | A catalyst available from Air Products as Polycat 5 consisting of pentamethyl diethylenetriamine. |
| Pentane: | | A 70:30 blend of cyclopentane: isopentane which is commercially available from Exxon Corporation under the name Exxsol 1600. |
| ISO: | | A polymeric methylene diphenyl diisocyanate available from Bayer MaterialScience under the name Mondur 489, having a viscosity of about 700 mPa·sec at 25°F and an NCO content of about 30.6% mg KOH/g. |

### Examples 3-5

Three different polyurethane foams were produced from the materials listed in Table 1 using the amounts indicated in Table 1. The physical properties of these foams are reported in Table 1.

**TABLE 1**

| Example | 3* | 4* | 5 |
|---|---|---|---|
| NOP A (pbw) | - | - | 46.12 |
| NOP B (pbw) | - | 46.12 | - |
| POLYOL C (pbw) | 46.98 | - | - |
| POLYOL D (pbw) | 15.56 | 15.37 | 15.37 |
| FR 1 (pbw) | 13.23 | 12.94 | 12.94 |
| FR 2 (pbw) | 3.23 | 3.20 | 3.20 |
| SURF (pbw) | 2.15 | 2.13 | 2.13 |
| CAT 1 (pbw) | 1.61 | 1.46 | 1.46 |
| CAT 2 (pbw) | 0.76 | 0.71 | 0.71 |
| CAT 3 (pbw) | 0.21 | 0.19 | 0.19 |
| Water (pbw) | 0.32 | 0.28 | 0.28 |
| Pentane (pbw) | 15.95 | 17.60 | 17.60 |
| ISO (pbw) | 152.5 | 141.7 | 141.7 |
| Gel Time (sec) | 40 | 38 | 39 |
| Overall Foam Density (lbs/ft.³) [kg/m³] | 2.91 [46.6] | 3.38 [54.1] | 3.05 [48.9] |
| Core Foam Density (lbs/ft.³) [kg/m³] | 2.71 [43.4] | 3.19 [51.1] | 2.52 [40.4] |
| k-Factor @ 75°F (BTU-in/h-ft.²-°F) [W / m K] | 0.161 [0.023] | 0.161 [0.023] | 0.150 [0.021] |
| Dimensional Stability @ 7 days (% volume change) | | | |
| At -30°C | 0.2 | -0.2 | -0.2 |
| At 70°C | 0.8 | -1.0 | -0.1 |
| At 70°C/100% Relative Humidity | 2.5 | 0.2 | 0.5 |
| Open Cell Content (%) | 8.8 | 13.0 | 11.7 |

* Comparative Example

## Claims

1. A process for the production of an amine-based polyol comprising reacting:
a) an amine adduct comprising the reaction product of
(i) an amine and
(ii) an alkylene oxide
in amounts such that from 1 to 2 moles of alkylene oxide are present for each amine group,
and
b) a triglyceride,
in the presence of
d) an alkylene oxide,
and
e) a catalyst
to form an amine-based polyol **characterized by** a calculated mean hydroxyl functionality of from 1.5 to 3.5, a number average equivalent weight, as determined by end group analysis of from 100 to 600, and an overall renewable content of from 20 to 85% by weight,
wherein the renewables content is calculated by a mass balance of the material charges to the reactor, followed by an assessment of the extent of the reaction by carrying out size exclusion chromatography of the reaction product;
wherein ASTM D6866 is used to determine the biobased carbon content of the product;
and wherein e) is potassium hydroxide (KOH) or a potassium alkoxide (KOR)

2. The process of Claim 1 in which sucrose is used as c).

3. The process of Claims 1 in which KOH is used as e) and the KOH is neutralized after the amine-based polyol forming reaction has been completed.

4. The process of any of Claims 1 to 3 in which the amine is toluene diamine.

5. The process of any of Claims 1 to 4 in which the triglyceride is selected from the group consisting of soybean oil, palm oil, palm kernel oil, castor oil, canola oil, high erucic acid content rapeseed oil, rapeseed oil, corn oil, jatropha oil, peanut oil, cottonseed oil, linseed oil, lard, tallow, bodied soybean oil, epoxidized soybean oil, camelina oil, lipids derived from algae, lesquerella oil, limnanthes oil, and mixtures thereof.

6. The process of any of Claims 1 to 5 in which the alkylene oxide a)(II) and the alkylene oxide d) is selected from ethylene oxide, propylene oxide, butylene oxide and mixtures thereof.

7. An amine/triglyceride-initiated polyether polyol **characterized by** a biorenewable content in the range of 50 to 85% by weight and number average equivalent weight, as determined by end group analysis of from 100 to 600;
wherein the renewables content is calculated by a mass balance of the material charges to the reactor, followed by an assessment of the extent of the reaction by carrying out size exclusion chromatography of the reaction product;
and wherein ASTM D6866 is used to determine the biobased carbon content of the product; wherein the amine/triglyceride-initiated polyether polyol is the reaction product of an amine adduct, soybean oil as a triglyceride and an alkylene oxide, wherein the amine adduct is the reaction product of ortho toluene diamine as a amine and an alkylene oxide in amounts such that from 1 to 2 moles of alkylene oxide are present for each amine group.

8. A rigid polyurethane foam having a k-factor at 75°F (23.9°C) of from 0.140 to 0.160 BTU-in/h-ft.²°F (0.020 to 0.023 W / m K) comprising the reaction product of
a) an isocyanate-reactive component comprising the amine-based polyol of Claim 7,
b) an organic polyisocyanate, and
c) a blowing agent.

## Patentansprüche

1. Verfahren zur Herstellung eines Polyols auf Aminbasis, umfassend Umsetzen:
a) eines Aminaddukts umfassend das Reaktionsprodukt von
(i) einem Amin und
(ii) einem Alkylenoxid
in solchen Mengen, dass von 1 bis 2 mol Alkylenoxid für jede Amingruppe vorhanden sind,
und
b) eines Triglycerids,
in Gegenwart von
d) einem Alkylenoxid,
und
e) einem Katalysator
um ein Polyol auf Aminbasis zu bilden, **gekennzeichnet durch** eine berechnete mittlere Hydroxyfunktionalität von 1,5 bis 3,5, ein zahlengemitteltes Äquivalentgewicht, wie bestimmt durch Endgruppenanalyse, von 100 bis 600, und einen Gesamtgehalt an erneuerbaren Rohstoffen von 20 bis 85 Gew.-%, wobei der Gehalt an erneuerbaren Rohstoffen durch eine Massebilanz der Materialzufuhren zu dem Reaktor, gefolgt von einer Bestimmung des Ausmaßes der Reaktion durch Durchführung von Größenausschlusschromatographie des Reaktionsprodukts,
berechnet wird;
wobei ASTM D6866 verwendet wird, um den biobasierten Kohlenstoffgehalt des Produkts zu bestimmen;
und wobei e) Kaliumhydroxid (KOH) oder ein Kaliumalkoxid (KOR) ist.

2. Verfahren gemäß Anspruch 1, wobei Saccharose als c) verwendet wird.

3. Verfahren gemäß Anspruch 1, wobei KOH als e) verwendet wird und das KOH neutralisiert wird, nachdem die Reaktion zum Bilden von Polyol auf Aminbasis abgeschlossen ist.

4. Verfahren gemäß einem der Ansprüche 1 bis 3, wobei das Amin Toluoldiamin ist.

5. Verfahren gemäß einem der Ansprüche 1 bis 4, wobei das Triglycerid ausgewählt ist aus der Gruppe bestehend aus Sojabohnenöl, Palmöl, Palmkernöl, Rizinusöl, Rapsöl, Rapssamenöl mit hohem Erucasäuregehalt, Rapssamenöl, Maisöl, Jatrophaöl, Erdnussöl, Baumwollsamenöl, Leinsamenöl, Schmalz, Talg, körperreichem Sojabohnenöl, epoxidiertem Sojabohnenöl, Leindotteröl, algenabgeleiteten Lipiden, Lesquerellaöl, Limnanthesöl und Gemischen davon.

6. Verfahren gemäß einem der Ansprüche 1 bis 5, wobei das Alkylenoxid a) (II) und das Alkylenoxid d) ausgewählt sind aus Ethylenoxid, Propylenoxid, Butylenoxid und Gemischen davon.

7. Amin/Triglycerid-initiiertes Polyetherpolyol, **gekennzeichnet durch** einen Gehalt an bioerneuerbaren Rohstoffen in dem Bereich von 50 bis 85 Gew.-% und ein zahlengemitteltes Äquivalentgewicht, wie bestimmt durch Endgruppenanalyse, von 100 bis 600;
wobei der Gehalt an erneuerbaren Rohstoffen durch eine Massebilanz der Materialzufuhren zu dem Reaktor, gefolgt von einer Bestimmung des Ausmaßes der Reaktion durch Durchführung von Größenausschlusschromatographie des Reaktionsprodukts, berechnet wird;
und wobei ASTM D6866 verwendet wird, um den biobasierten Kohlenstoffgehalt des Produkts zu bestimmen; wobei das Amin/Triglycerid-initiierte Polyetherpolyol das Reaktionsprodukt eines Aminaddukts, von Sojabohnenöl als einem Triglycerid und eines Alkylenoxids ist, wobei das Aminaddukt das Reaktionsprodukt von ortho-Toluoldiamin als einem Amin und einem Alkylenoxid in solchen Mengen ist, dass von 1 bis 2 mol Alkylenoxid für jede Amingruppe vorhanden sind.

8. Polyurethanhartschaumstoff mit einem k-Faktor bei 75 °F (23,9 °C) von 0,140 bis 0,160 BTU-in/h-ft²°F (0,020 bis 0,023 W/m K), umfassend das Reaktionsprodukt von
a) einer isocyanatreaktiven Komponente umfassend das Polyol auf Aminbasis gemäß Anspruch 7,
b) einem organischen Polyisocyanat und
c) einen Treibmittel.

## Revendications

1. Procédé pour la production d'un polyol à base d'amine comprenant la mise en réaction de :
a) un adduit d'amine comprenant le produit de réaction de
(i) une amine et
(ii) un oxyde d'alkylène
en des quantités telles que de 1 à 2 moles d'oxyde d'alkylène sont présentes pour chaque groupe amine,
et
b) un triglycéride,
en présence de
d) un oxyde d'alkylène,
et
e) un catalyseur
pour former un polyol à base d'amine **caractérisé par** une fonctionnalité d'hydroxyle moyenne calculée allant de 1,5 à 3,5, un poids équivalent moyen en nombre, comme déterminé par analyse de groupe terminal allant de 100 à 600, et une teneur renouvelable globale allant de 20 à 85 % en poids,
la teneur en composés renouvelables étant calculée par un équilibre massique des charges de matériau au réacteur, suivi d'une évaluation de l'étendue de la réaction en effectuant une chromatographie d'exclusion stérique du produit de réaction ;
la norme ASTM D6866 étant utilisée pour déterminer la teneur en carbone d'origine biologique du produit ;
et e) étant de l'hydroxyde de potassium (KOH) ou un alcoxyde de potassium (KOR).

2. Procédé selon la revendication 1 dans lequel du saccharose est utilisé comme c).

3. Procédé selon la revendication 1 dans lequel du KOH est utilisé comme e) et le KOH est neutralisé une fois la réaction de formation du polyol à base d'amine terminée.

4. Procédé selon l'une quelconque des revendications 1 à 3 dans lequel l'amine est une toluène diamine.

5. Procédé selon l'une quelconque des revendications 1 à 4 dans lequel le triglycéride est sélectionné dans le groupe constitué par l'huile de soja, l'huile de palme, l'huile de palmiste, l'huile de ricin, l'huile de canola, l'huile de colza à teneur élevée en acide érucique, l'huile de colza, l'huile de maïs, l'huile de jatropha, l'huile d'arachide, l'huile de graines de coton, l'huile de lin, le saindoux, le suif, l'huile de soja corsée, l'huile de soja époxydée, l'huile de caméline, des lipides issus d'algues, l'huile de lesquerella, l'huile de limnanthes et des mélanges correspondants.

6. Procédé selon l'une quelconque des revendications 1 à 5 dans lequel l'oxyde d'alkylène a) (II) et l'oxyde d'alkylène d) sont sélectionnés parmi l'oxyde d'éthylène, l'oxyde de propylène, l'oxyde de butylène et des mélanges correspondants.

7. Polyéther polyol initié par amine/triglycéride **caractérisé par** une teneur biorenouvelable dans la plage de 50 à 85 % en poids et un poids équivalent moyen en nombre, comme déterminé par analyse de groupe terminal allant de 100 à 600 ;
la teneur en composés renouvelables étant calculée par un équilibre massique des charges de matériau au réacteur, suivi d'une évaluation de l'étendue de la réaction en effectuant une chromatographie d'exclusion stérique du produit de réaction ;
et la norme ASTM D6866 étant utilisée pour déterminer la teneur en carbone d'origine biologique du produit ; le polyéther polyol initié par amine/triglycéride étant le produit de réaction d'un adduit d'amine, d'huile de soja en tant que triglycéride et d'un oxyde d'alkylène, l'adduit d'amine étant le produit de réaction d'orthotoluènediamine en tant qu'amine et d'un oxyde d'alkylène en des quantités telles que de 1 à 2 moles d'oxyde d'alkylène sont présentes pour chaque groupe amine.

8. Mousse de polyuréthane rigide ayant un facteur k à 75 °F (23,9 °C) allant de 0,140 à 0,160 BTU-in/h-ft.²°F (0,020 à 0,023 W/m K) comprenant le produit de réaction de
a) un composant réactif envers un isocyanate comprenant le polyol à base d'amine selon la revendication 7,
b) un polyisocyanate organique, et
c) un agent de gonflement.
